# EUROPÄISCHE PATENTSCHRIFT

(11) **EP 3 872 951 B1**
(45) Veröffentlichungstag und Bekanntmachung des Hinweises auf die Patenterteilung: **17.12.2025**
(21) Anmeldenummer: 21157909.9
(22) Anmeldetag: 18.02.2021
(51) Int. Cl.: H02J 7/00

(54) **AKKUMULATOR MIT GERÄTEERKENNUNGSFUNKTION UND VERFAHREN ZUR GERÄTEERKENNUNG**
BATTERY WITH DEVICE DETECTION FUNCTION AND METHOD FOR DETECTING DEVICE
ACCUMULATEUR À FONCTION DE DÉTECTION DES APPAREILS ET PROCÉDÉ DE DÉTECTION DES APPAREILS

(30) Priorität: 27.02.2020 DE 102020105246
(43) Veröffentlichungstag der Anmeldung: 01.09.2021
(73) Patentinhaber: Wacker Neuson Produktion GmbH & Co. KG, 85084 Reichertshofen (DE)
(72) Erfinder: BERGER, Rudolf, 82031 Grünwald (DE); DILLER, Patrick, 85107 Baar-Ebenhausen (DE); WEISKOPF, Alto, 85250 Altomünster (DE); GLANZ, Christian, 85221 Dachau (DE)
(74) Vertreter: Müller Hoffmann & Partner

(56) Entgegenhaltungen:
- JP-A- 2006 245 012
- US-A1- 2005 248 309
- US-A1- 2010 176 766
- US-A1- 2012 118 595
- US-B2- 10 299 821

## Beschreibung

Die Erfindung betrifft einen elektrischen Akkumulator zum Koppeln mit einem Gerät sowie ein mit diesem Akkumulator ausgestattetes Gerät, ein System mit einem derartigen Gerät mit Akkumulator und ein Verfahren zum Versorgen des Geräts mit elektrischer Energie von dem Akkumulator.

Viele Geräte bzw. Maschinen, insbesondere bewegliche Maschinen, wie zum Beispiel Fahrzeuge, Baumaschinen etc. weisen heutzutage elektrische Antriebe auf, die durch einen elektrischen Energiespeicher, insbesondere eine wiederaufladbare Batterie, mit elektrischem Strom gespeist werden.

Dabei haben zum Beispiel Anbieter von kleineren Geräten, wie zum Beispiel Rasenmäher, Bohrmaschinen, Akkuschrauber, Schleifgeräte etc., ein Konzept entwickelt, bei dem verschiedene Gerätetypen mit einem einheitlichen Akkumulator gekoppelt werden können. Dieser Akkumulator (nachfolgend auch als Akku bezeichnet) ist demnach geeignet, mit verschiedensten Gerätetypen verbunden zu werden. Dazu ist an den jeweiligen Geräten eine entsprechende Akkuaufnahme ausgebildet, in die der Akku eingesteckt werden kann.

Für kleinere Geräte, z.B. für Hand- und Heimwerker, können dementsprechend die Akkumulatoren einfach umgesteckt werden. Bei größeren Geräten hingegen, wie zum Beispiel Baugeräten wie Vibrationsplatten (Rüttelplatten), Stampfern zur Bodenverdichtung oder Innenrüttlern zur Betonverdichtung, sind ebenfalls entsprechende Wechsel-Akkumulatoren bekannt. Da die einheitlich aufgebauten Ackumulatoren geräteunabhängig bereitgestellt werden, ist es nicht möglich, bestimmte Funktionen oder Eigenschaften hinsichtlich des Bedienverhaltens durch einen an einem Gerät angebrachten Akku vorzugeben oder zu realisieren. Dies betrifft zum Beispiel die Stromzufuhr, die dementsprechend geräteübergreifend für alle Geräte gleich ist. Ebenso gilt dies für Sicherheitsfunktionen, die bei bestimmten Gerätetypen sinnvoll oder erforderlich sind, bei anderen Geräten aber nicht erforderlich. Wenn ein entsprechender Wechsel-Akku für verschiedene Gerätetypen eingesetzt werden soll, sind die Sicherheitsfunktionen geräteübergreifend bei allen unterschiedlichen Geräten zwingend vorhanden, obwohl sie bei manchen Geräten gar nicht erforderlich wären.

Aus US 10 299 821 B2 ist ein handgehaltenes, batteriebetriebenes chirurgisches Instrument bekannt. Das Instrument weist eine Batterieanordnung auf, die in der Lage ist, den Typ des Instruments zu identifizieren und entsprechend den Anforderungen des Instruments die Energieabgabe zu regeln.

Aus JP 2006 245012 A ist eine entsprechende Batterieanordnung bekannt.

In US 2005/248309 A1 wird die Möglichkeit der Übertragung einer Geräte-Identität an einen Batteriepack beschrieben.

Ähnliches geht auch aus US 2010/176766 A1 und US 2012/118595 A1 hervor.

Der Erfindung liegt die Aufgabe zugrunde, verschiedene Funktionen bzw. Verhaltensweisen eines Akkumulators angepasst an ein jeweils mit dem Akkumulator gekoppeltes Gerät bereitstellen zu können.

Die Aufgabe wird erfindungsgemäß durch einen Akkumulator mit den Merkmalen von Anspruch 1 gelöst. In den nebengeordneten Ansprüchen wird ein mit dem Ackumulator koppelbares Gerät, ein System mit einem derartigen Gerät und einem Akkumulator sowie ein Verfahren zum Versorgen eines Geräts mit elektrischer Energie von einem Akkumulator angegeben. Vorteilhafte Ausgestaltungen sind in den abhängigen Ansprüchen definiert.

Es wird ein Akkumulator zum Koppeln mit einem Gerät angegeben, mit einem Energiespeicher zum Speichern von elektrischer Energie und mit einer Akkusteuerung zum Beeinflussen der Übertragung der elektrischen Energie zu dem Gerät, wobei die Akkusteuerung ausgebildet ist zum Erkennen des Gerätetyps des mit dem Akkumulator gekoppelten Geräts und zum Beeinflussen der Übertragung der elektrischen Energie zu dem Gerät in Abhängigkeit von dem erkannten Gerätetyp.

Dementsprechend ist der Akkumulator (nachfolgend auch als Akku bezeichnet) bzw. dessen Akkusteuerung in der Lage, den Gerätetyp des mit dem Akku gekoppelten Geräts zu erkennen. Dies erfolgt zum Beispiel durch das Empfangen einer Typ-Information bezüglich des Gerätetyps. In dem Akku selbst kann eine gerätespezifische Information hinterlegt sein, die das Verhalten der Akkusteuerung, insbesondere im Hinblick auf die Beeinflussung bei der Übertragung der elektrischen Energie zu dem Gerät bestimmt. Die gerätespezifische Information ist eine Information, wie sich der Akku speziell für diesen Gerätetyp verhalten soll.

Damit ist der Akkumulator in der Lage, das Gerät, an dem er angeschlossen ist, zu erkennen. Nachdem der Akkumulator erkannt hat, an welches Gerät er angeschlossen ist, verhält sich der Akkumulator so, wie wenn er gezielt für dieses Gerät ausgelegt bzw. angepasst wäre. Damit können bei unterschiedlichen gerätespezifischen Informationen für unterschiedliche Gerätetypen auch jeweils ein unterschiedliches Verhalten des Akkus in Abhängigkeit von dem angeschlossenen Gerät erreicht werden.

Gemäß Anspruch 1 ist dabei das Gerät selbst nicht Teil des Anspruchs. Vielmehr wird allein der Akkumulator definiert, der mit dem Gerät entsprechend koppelbar ist.

Bei einer Ausführungsform weist der Akkumulator einen Energiespeicher zum Speichern von elektrischer Energie auf, sowie eine Elektroschnittstelle zum Übertragen der elektrischen Energie aus dem Energiespeicher zum Gerät, eine Akkusteuerung zum Steuern der Elektroschnittstelle und Beeinflussen der Übertragung der elektrischen Energie zu dem Gerät, und eine mit dem Gerät koppelbare Geräteschnittstelle zur Übertragung von und zu dem Gerät. Dabei können in der Ackusteuerung gerätespezifische Informationen für wenigstens zwei unterschiedliche Gerätetypen hinterlegt sein. Die Akkusteuerung kann ausgebildet sein zum Erkennen des Gerätetyps eines an die Geräteschnittstelle gekoppelten Geräts. Dabei kann die Akkusteuerung ausgebildet sein zum Beeinflussen der Übertragung der elektrischen Energie in Abhängigkeit von dem erkannten Gerätetyp.

Das Gerät weist zum Beispiel eine Gerätesteuerung auf, die mit der Akkusteuerung kommunizieren kann. Die Gerätesteuerung übermittelt dementsprechend der Akkusteuerung die notwendige Information hinsichtlich des Gerätetyps. Daraufhin kann die Akkusteuerung die entsprechende gerätespezifische Information für diesen erkannten Gerätetyp auswählen und in Abhängigkeit von der gerätespezifischen Information die Energiezufuhr zu dem Gerät beeinflussen.

Die Elektroschnittstelle dient zum Übertragen der Energie, während die Geräteschnittstelle zum Übertragen von Daten oder Signalen dient. Die beiden Schnittstellen können getrennt voneinander bereitgestellt werden. Ebenso können sie aber auch integriert sein, so dass keine separaten Komponenten erforderlich sind. Zum Beispiel ist es auch möglich, die Elektroschnittstelle ebenfalls zum Übertragen von Daten und Signalen auszubilden, so dass sie auch als Geräteschnittstelle fungieren kann.

Die gerätespezifischen Informationen können auf der Akku-Firmware hinterlegt sein. Ebenso kann die Akkuschnittstelle auch in die Elektroschnittstelle integriert sein, so dass keine separaten Bauelemente oder Komponenten erforderlich sind.

Üblicherweise weist ein elektrischer Energiespeicher ein Batteriemanagement-System (BMS) auf, zum Verwalten des Energiespeichers. Die Funktion des Verwaltens des Energiespeichers kann dabei zahlreiche Aufgaben umfassen, die an sich aus dem Stand der Technik bekannt sind. So können insbesondere Batterieparameter ermittelt werden, um Informationen für den sicheren Betrieb von im Energiespeicher vorhandenen Batteriezellen zu gewährleisten. Dazu gehören zum Beispiel genauere Informationen über die aktuelle Restkapazität (State-Of-Charge, SOC) und die maximal verfügbare Batteriekapazität (State-Of-Health, SOH). Gerade bei großen Entladeraten dient das Batteriemanagement-System dazu, Informationen über die Ladezustände der einzelnen Batteriezellen zu ermitteln. Zudem kann auch die Temperatur des Energiespeichers bzw. der einzelnen Batteriezellen erfasst werden.

Das Batteriemanagement-System kann Teil der Akkusteuerung sein, um die Energieübertragung vom Energiespeicher zum Gerät zu steuern und zu beeinflussen.

Zum Erkennen des Gerätetyps des an die Geräteschnittstelle gekoppelten Geräts kann eine von dem Gerät abgegebene Typinformation über die Geräteschnittstelle durch die Akkusteuerung empfangbar sein. Bei der Typ-Information kann es sich insbesondere um eine Identifikations-Information handeln, aufgrund der das Gerät identifizierbar ist.

Die Akkusteuerung kann ausgebildet sein zum Beeinflussen der EnergieÜbertragung mit Hilfe von wenigstens einem Parameter, ausgewählt aus der Gruppe maximal zulässige Stromstärke, Einschalten nur bei Vorliegen vorgegebener weiterer Bedingungen, Abfrage von Sicherheitsparametern in Abhängigkeit von dem erkannten Gerätetyp, Verlauf des von der Akkusteuerung zur Verfügung gestellten elektrischen Stroms über die Zeit, Prüfen einer vorgegebenen Einschaltreihenfolge, Einschaltverhalten nach vorherigem Betrieb und Abschalten des Geräts.

Dementsprechend kann das Verhalten des Akkumulators hinsichtlich verschiedener Kriterien auf den Gerätetyp angepasst werden.

Ein Kriterium ist das Sicherheitsverhalten, so dass der Betrieb des Akkus stets in einem sicheren Bereich gehalten wird. Dementsprechend können zum Beispiel Stromgrenzen definiert und eingehalten werden, um zum Beispiel Beschädigungen des Akkus, aber auch des angeschlossenen Geräts zu vermeiden.

Ebenso kann ein ungewolltes Einschalten verhindert werden, zum Beispiel bei einem Gerät, dessen ungewollter Betrieb eine Gefährdung für die Umwelt und vor allem für den Bediener bedeuten kann. Bei einem Rüttelstampfer zur Bodenverdichtung zum Beispiel soll verhindert werden, dass der Stampfer plötzlich seine Arbeitsbewegung beginnt, um den Bediener zu schonen.

Weiterhin kann eine Abfrage eines Sicherheitsparameters vorgeschrieben werden, in Abhängigkeit von dem angekoppelten Gerät. Zum Beispiel kann verlangt werden, dass an dem Gerät ein Schalter, insbesondere ein zusätzlicher Schalter (zum Beispiel Totmannschalter) betätigt wird, um eine Inbetriebnahme des Geräts zu bewirken. Diese Abfrage des Sicherheitsparameters ist gerätespezifisch und zum Beispiel nicht bei jedem Gerätetyp erforderlich. Die Energiezufuhr vom Akku erfolgt nur, wenn der entsprechende Schalter zusätzlich betätigt wurde.

Weiterhin kann der Verlauf des Stroms über die Zeit beeinflusst werden, zum Beispiel in Form von sogenannten Hochlaufkurven. Dabei kann zum Beispiel eine Vorladeschaltung für Kondensatoren der Geräteelektronik bedient werden. Entsprechend können Hochlaufkurven für einen schnellen oder einen langsamen Anlaufbetrieb eines von dem Energiespeicher gespeisten Elektromotors realisiert werden.

Zudem kann das Bedienverhalten aufgrund von einer Kopplung des Akkus mit einem entsprechenden Gerätetyp angepasst werden. Dazu kann zum Beispiel die Schaltreihenfolge in Abhängigkeit von dem Gerät vorgegebenen werden (erst Akku einschalten, dann Gerät einschalten), während eine umgekehrte Schaltreihenfolge als fehlerhaft erkannt wird, so dass ein Anlaufen des Geräts verhindert wird.

Auch ein Einschaltverhalten des Geräts nach einem vorherigen Abstellen des Geräts kann beeinflusst werden. Während zum Beispiel bei einem Innenrüttler kein Neustart des Akkumulators erforderlich ist, kann bei einem Stampfer ein Wiedereinschalten zum Beispiel nur nach einem Akkuneustart und einem Rücksetzen des Geräteschalters erfolgen.

Weiterhin kann als Parameter vorgegeben werden, wie lange das angeschlossene Gerät im Standby gehalten werden kann. Je nach gerätespezifischer Vorgabe kann das Gerät vollständig ausgeschaltet und vom elektrischen Strom aus dem Energiespeicher getrennt werden. Ebenso ist es aber auch möglich, eine geringe Stromzufuhr aufrechtzuerhalten, um einen Standbybetrieb des Geräts bzw. zum Beispiel nur der Steuerelektronik des Geräts über einen längeren vorgegebenen Zeitraum aufrechtzuerhalten.

Auch besteht die Möglichkeit, durch den Akku Strom bereitzustellen, ohne dass die Hauptfunktion aktiviert ist, also ohne dass dem Akku der eigentliche Arbeitsstrom entnehmbar ist, der zum Arbeitsbetrieb des von dem Akku gespeisten Geräts erforderlich ist. Dieser vom Akku für eine Nebenfunktion bereitstellbare Strom kann dementsprechend in Abgrenzung zum Arbeitsstrom auch als Nebenstrom bezeichnet werden.

Beispielsweise kann damit ermöglicht werden, dass dem Akku (Neben-)Strom für eine Kühlung des Akkus entnommen werden kann, während aber das Gerät nicht in Betrieb genommen werden kann, also kein Arbeitsstrom zur Verfügung gestellt wird. Die Kühlung kann z.B. mittels eines Kühlgebläses (Ventilator) und Erzeugen eines Kühlluftstroms oder mittels einer Kühlmittelpumpe und einer Flüssigkeitskühlung bewirkt werden.

Ebenso ist es möglich, mithilfe des Akkus und des von ihm zur Verfügung gestellten Nebenstroms eine Beleuchtungsvorrichtung zu betreiben, die z.B. zu einer Umfeldbeleuchtung am Akku oder auch als Beleuchtung eines Bedienfelds am Akku dient.

Weitere Funktionen, die durch den Nebenstrom mit elektrischer Energie versorgt werden, sind ebenso möglich. Dazu gehört eine Akustikeinrichtung zum Erzeugen von Akustiksignalen (z.B. Warntönen) oder auch eine Ortungseinrichtung, die es bedarfsweise ermöglicht, den Aufenthaltsort des Akkus zu ermitteln.

Der Akkumulator kann eine kompakte Einheit bilden, die in das Gerät einsetzbar ist. Dazu können entsprechende mechanische Befestigungsmittel und elektrische Kontakte vorgesehen sein, um die Verbindung zwischen Akkumulator bzw. Akkugehäuse und Gerät zu gewährleisten. Dementsprechend kann die Geräteschnittstelle in geeigneter Weise ausgebildet sein, zum lösbaren Verbinden mit dem Gerät.

Das den Energiespeicher und die Schnittstellen umgebende Gehäuse (Akkugehäuse) kann eine mechanische Befestigungseinrichtung aufweisen, zum Befestigen des Akkumulators an dem Gerät.

Weiterhin können an dem Gehäuse elektrische Kontakte ausgebildet sein, zum elektrischen Anschließen des Akkumulators an dem Gerät, um elektrischen Strom von dem Energiespeicher auf einen in dem Gerät vorhandenen Verbraucher, zum Beispiel einen Elektromotor sowie die Geräteelektronik des Geräts, übertragen zu können.

Zudem können an dem Gehäuse elektrische Kontakte ausgebildet sein, die Bestandteil der Geräteschnittstelle sind, um die Daten zwischen Akkumulator und Geräte übertragen zu können.

Die Gestaltung des Akkumulators in Form einer kompakten Einheit, die insbesondere in einem gemeinsamen Gehäuse untergebracht ist, erlaubt eine leichte Auswechselbarkeit an dem Gerät. Der Akkumulator kann in einer Einheit, also zusammen mit dem Energiespeicher und den beiden Schnittstellen ausgewechselt werden. Jeder (Wechsel-)Akkumulator ist dabei komplett mit allen Schnittstellen ausgestattet. So können z.B. mehrere (Wechsel-)Akkumulatoren vorgesehen sein, die wechselweise in dem Gerät eingesetzt und - nach Entladung - wieder ausgebaut und getrennt von dem Gerät geladen werden können.

Es wird ein Gerät angegeben, mit einer Gerätesteuerung und einer durch die Gerätesteuerung steuerbaren Arbeitsvorrichtung, sowie mit einem Akkumulator mit den oben beschriebenen Merkmalen, wobei der Akkumulator an dem Gerät wechselbar befestigt sein kann, und wobei zwischen der Gerätesteuerung und der Ackusteuerung des Akkumulators Daten über die Geräteschnittstelle des Akkumulators austauschbar sind.

Als derartiges Gerät eignet sich zum Beispiel ein Baugerät, wie zum Beispiel eine Vibrationsplatte, ein Vibrationsstampfer oder ein Innenrüttler. Auch andere Geräte, wie zum Beispiel Hämmer, Bohrgeräte, Trennschleifer, Rasenmäher, Kettensägen etc. sind geeignet, um von dem Akkumulator mit Energie versorgt zu werden.

Das jeweilige Gerät ist in der Lage, mit der Akkusteuerung Daten auszutauschen. Bei diesen Daten kann es sich zum Beispiel auch um Typ-Information bezüglich des Gerätetyps handeln.

Es wird ein System angegeben, mit einem Gerät und einem Akkumulator der obigen Art, wobei der Akkumulator an dem Gerät wechselbar befestigt ist und mit dem Gerät koppelbar ist, wobei in der Akkusteuerung gerätespezifische Informationen zu wenigstens zwei verschiedenen Gerätetypen hinterlegt sind, wobei von dem Gerät zu dem Akkumulator eine Typ-Information bezüglich des Typs dieses Geräts übertragbar ist, und wobei durch die Akkusteuerung eine Stromzufuhr von dem Akkumulator zu dem Gerät steuerbar ist in Abhängigkeit von der Typ-Information.

Ein Verfahren zum Versorgen eines Geräts mit elektrischer Energie von einem Ackumulator mit den obigen Merkmalen, weist die Schritte auf: Übertragen einer Typ-Information bezüglich des Typs des Geräts von dem Gerät zu dem Akkumulator und Steuern der Energieübertragung von dem Akkumulator zu dem Gerät in Abhängigkeit von der Typ-Information.

Das Verfahren kann insbesondere als Start-Routine ausgebildet sein.

Dabei kann beim Starten des Geräts eine Start-Routine durchgeführt werden, bei der von dem Gerät die Typ-Information an die Akkusteuerung übertragen wird. Die Parameter für den Betrieb der Akkusteuerung können festgelegt werden aufgrund der übertragenen Typ-Information und aufgrund von in der Akkusteuerung hinterlegten gerätespezifischen Informationen.

Durch das Erkennen des angeschlossenen Gerätes können zusätzliche Features sowie Sicherheitsfunktionen berücksichtigt werden.

Beim Startvorgang des Geräts läuft eine Start-Routine ab, bei der der Akkumulator und die Geräteelektronik kommunizieren und prüfen, ob alle Parameter übereinstimmen, um das Gerät zu starten. Dabei wird zum Beispiel die Geräte-Identifikation (ID) abgefragt, um entsprechend für jeden Gerätetyp individuelle Einstellungen zu definieren.

Zum Beispiel ist davon auszugehen, dass ein Innenrüttler in Bezug auf die Bedienersicherheit weniger kritisch zu sehen ist als ein Vibrationsstampfer. Während ein Innenrüttler lediglich zu vibrieren beginnt, vollzieht ein Vibrationsstampfer im Betrieb starke Schwingungen mit großen Amplituden, die bei einem überraschenden Loslaufen für eine Gefährdung des Bedieners sorgen können. Dementsprechend sind im Falle des Vibrationsstampfers mehrere Sicherheitsfunktionen zu beachten, die beim Startvorgang abgeprüft werden. Für den Innenrüttler hingegen kann eine vereinfachte Start-Routine herangezogen werden, da weniger Sicherheitsfunktionen notwendig sind, so dass damit die Bedienung erleichtert wird.

Das Erkennen der unterschiedlichen Gerätetypen kann dadurch erfolgen, dass eine entsprechende Identifikations-Information an die Akkusteuerung übertragen wird. Ebenso ist es aber auch möglich, zum Beispiel eine Anlaufkurve oder einen Stromverlauf über die Zeit zu analysieren. Abhängig von der Charakteristik (zum Beispiel Steigung) können verschiedene Geräte anhand von hinterlegten Vergleichswerten unterschieden werden.

Diese und weitere Vorteile und Merkmale werden nachfolgend anhand eines Beispiels unter Zuhilfenahme der begleitenden Figur näher erläutert. Es zeigt:

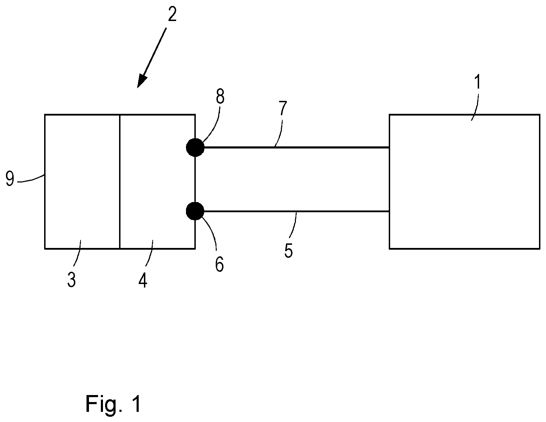

**Fig. 1** einen schematischen Aufbau eines erfindungsgemäßen Systems mit einem Gerät und einem Akkumulator.

Fig. 1 zeigt in schematischer Darstellung ein Gerät 1 und einen mit dem Gerät 1 koppelbaren Akkumulator 2, der insbesondere zur Energieversorgung des Geräts 1 dient.

Der Akkumulator 2 weist einen Energiespeicher 3 auf, der zum Beispiel mehrere Batteriezellen umfasst und zur Energieversorgung eines in dem Gerät 1 vorhandenen Verbrauchers (nicht dargestellt) dient. Weiterhin weist der Akkumulator 2 eine Akkusteuerung 4 auf, die zum Beispiel ein Batteriemanagement-System aufweisen kann.

Zur Energieübertragung von dem Energiespeicher 3 zum Gerät 1 ist eine elektrische Verbindung 5 vorgesehen, die durch die Akkusteuerung 4 gesteuert bzw. beeinflusst wird. Die elektrische Verbindung 5 kann geeignete Stromleitungen und Stromkontakte aufweisen.

Zur Ankopplung der elektrischen Verbindung 5 an die Akkusteuerung 4 bzw. den Akkumulator 2 ist eine Elektroschnittstelle 6 vorgesehen.

Zur Datenübertragung zwischen dem Gerät 1 und dem Akkumulator 2, insbesondere zu der Akkusteuerung 4 ist eine Datenleitung 7 (auch drahtlos möglich) vorgesehen, zu deren Verbindung eine Geräteschnittstelle 8 am Akkumulator 2 vorhanden ist.

Die Geräteschnittstelle 8 und die Elektroschnittstelle 6 können auch in einer Einheit zusammen ausgeführt sein. So ist es auch möglich, dass über die Elektroschnittstelle 6 eine Datenübertragung erfolgt, so dass die Elektroschnittstelle 6 gleichzeitig auch als Geräteschnittstelle 8 dient.

Bei dem Gerät 1 kann es sich zum Beispiel um eine Vibrationsplatte (Rüttelplatte), einen Stampfer oder einen Innenrüttler zur Betonverdichtung (Rüttelflasche) handeln. Ebenso sind auch andere, insbesondere kleinere Geräte geeignet, die einen Wechselakku nutzen. All diesen Maschinen ist es gemeinsam, dass sie einen Motor, insbesondere einen Elektromotor aufweisen, der die erforderliche Antriebsenergie zum Bewirken der gewünschten Arbeitswirkung mit Hilfe einer entsprechend gestalteten Arbeitsvorrichtung erzeugt. Die elektrische Versorgung des als Verbraucher dienenden Elektromotors erfolgt durch den Energiespeicher 3 im Akkumulator 2 über die elektrische Verbindung 5.

Der Energiespeicher 3 ist zusammen mit der Akkusteuerung 4, der Elektroschnittstelle 6 und der Geräteschnittstelle 8 in einem gemeinsamen Gehäuse 9 untergebracht. Dabei können insbesondere die elektronischen Komponenten in einer Baueinheit, gegebenenfalls verteilt auf mehrere Platinen oder sogar auf einer gemeinsamen Platine zusammen integriert sein.

Das Gerät 1 ist in Fig. 1 deutlich getrennt von dem Akkumulator 2 dargestellt. Selbstverständlich ist es aber vorgesehen, dass der Akkumulator 2 von dem Gerät 1 aufgenommen bzw. getragen wird und dementsprechend in eine an dem Gerät 1 vorgesehene Akkuaufnahme aufgenommen wird. Insoweit wird dann der Akkumulator 2 auch Bestandteil des Geräts 1. Wenn jedoch im Rahmen der vorliegenden Anmeldung von dem Gerät 1 die Rede ist, sind dadurch die weiteren Komponenten des Geräts - außer dem Akkumulator 2 - zu verstehen. Insofern verläuft eine virtuelle Systemgrenze zwischen dem Akkumulator 2 und den weiteren Komponenten des Geräts 1, wie Fig. 1 zeigt. Bei diesen weiteren Komponenten kann es sich um einen oder mehrere Verbraucher handeln, wie zum Beispiel Elektroantriebe, Steuerungen, Beleuchtungen, Sensoren etc., aber auch mechanische Komponenten, die als Bestandteil des Geräts 1 zum Erreichen des gewünschten Arbeitserfolgs dienen können.

Aufgrund der Informationen, die die Akkusteuerung 4 von dem Gerät 1 erhält, kann die Akkusteuerung 4 den Gerätetyp des angeschlossenen Geräts 1 erkennen und dementsprechend vorab in der Akkusteuerung 4 hinterlegte gerätespezifische Informationen für diesen erkannten Gerätetyp aktivieren. Dementsprechend arbeitet die Akkusteuerung 4 nachfolgend gemäß den Vorgaben dieser gerätespezifischen Informationen und steuert bzw. beeinflusst in entsprechender Weise die Energiezufuhr vom Energiespeicher 3 zu dem Gerät 1.

Die für das Erkennen des Gerätetyps erforderliche Typ-Information kann entweder direkt von dem Gerät 1 bzw. der dort vorhandenen Geräteelektronik über die Datenleitung 7 und die Geräteschnittstelle 8 zu der Akkusteuerung 4 übermittelt werden. Ebenso ist es aber auch möglich, dass die Akkusteuerung 4 das Verhalten des Geräts erkennt und daraus Rückschlüsse auf den jeweiligen Gerätetyp zieht, so dass auch auf diese Weise der Gerätetyp erkannt werden kann.

## Patentansprüche

1. Akkumulator (2) zum Koppeln mit einem Gerät (1), mit
- einem Energiespeicher (3) zum Speichern von elektrischer Energie; und mit
- einer Akkusteuerung (4) zum Beeinflussen der Übertragung der elektrischen Energie zu dem Gerät (1);
wobei die Akkusteuerung (4) ausgebildet ist,
- zum Erkennen des Gerätetyps des mit dem Akkumulator (2) gekoppelten Geräts (1); und
- zum Beeinflussen der Übertragung der elektrischen Energie zu dem Gerät (1) in Abhängigkeit von dem erkannten Gerätetyp;
**dadurch gekennzeichnet, dass**
- die Akkusteuerung (4) ausgebildet ist zum Beeinflussen der EnergieÜbertragung mithilfe von wenigstens einem Parameter, ausgewählt aus der Gruppe
+ Einschalten nur bei Vorliegen vorgegebener weiterer Bedingungen
+ Abfrage von Sicherheitsparametern in Abhängigkeit von dem erkannten Gerätetyp
+ Verlauf des von der Akkusteuerung (4) zur Verfügung gestellten elektrischen Stroms über die Zeit
+ Prüfen einer vorgegebenen Einschaltreihenfolge
+ Einschaltverhalten nach vorherigem Betrieb und Abschalten des Geräts (1).

2. Akkumulator nach Anspruch 1, mit
- einem Energiespeicher (3) zum Speichern von elektrischer Energie;
- einer Elektroschnittstelle (6) zum Übertragen der elektrischen Energie aus dem Energiespeicher (3) zu dem Gerät (1);
- einer Akkusteuerung (4) zum Steuern der Elektroschnittstelle (6) und Beeinflussen der Übertragung der elektrischen Energie zu dem Gerät;
- einer mit dem Gerät (1) koppelbaren Geräteschnittstelle (8) zum Übertragen von Daten von und zu dem Gerät (1);
wobei
- in der Akkusteuerung (4) gerätespezifische Informationen für wenigstens zwei unterschiedliche Gerätetypen hinterlegt sind;
- die Akkusteuerung (4) ausgebildet ist zum Erkennen des Gerätetyps eines an die Geräteschnittstelle (8) gekoppelten Geräts (1);
- die Akkusteuerung (4) ausgebildet ist zum Beeinflussen der Übertragung der elektrischen Energie in Abhängigkeit von dem erkannten Gerätetyp.

3. Akkumulator nach einem der vorstehenden Ansprüche, wobei zum Erkennen des Gerätetyps des an die Geräteschnittstelle (8) gekoppelten Geräts (1) eine von dem Gerät (1) abgegebene Typ-Information über die Geräteschnittstelle (8) durch die Akkusteuerung (4) empfangbar ist.

4. Gerät (1), mit
- einer Gerätesteuerung und einer durch die Gerätesteuerung steuerbaren Arbeitsvorrichtung; und mit
- einem Akkumulator (2) nach einem der Ansprüche 1 bis 3;
wobei
- der Akkumulator (2) an dem Gerät (1) wechselbar befestigt ist; und wobei
- zwischen der Gerätesteuerung und der Akkusteuerung (4) des Akkumulators (2) Daten über die Geräteschnittstelle (8) des Akkumulators (2) austauschbar sind.

5. System mit einem Gerät (1) und einem Akkumulator (2) nach einem der Ansprüche 1 bis 3, wobei
- der Akkumulator (2) an dem Gerät (1) wechselbar befestigt und mit dem Gerät (1) koppelbar ist;
- in der Akkusteuerung (4) gerätespezifische Informationen zu wenigsten zwei verschiedenen Gerätetypen hinterlegt sind;
- von dem Gerät (1) zu dem Akkumulator (2) eine Typ-Information bezüglich des Typs dieses Geräts (1) übertragbar ist; und wobei
- durch die Akkusteuerung (4) eine Stromzufuhr von dem Akkumulator (2) zu dem Gerät (1) steuerbar ist in Abhängigkeit von der Typ-Information.

6. Verfahren zum Versorgen eines Geräts (1) mit elektrischer Energie von einem Akkumulator (2) nach einem der Ansprüche 1 bis 3, mit den Schritten
- Übertragen einer Typ-Information bezüglich des Typs des Geräts (1) von dem Gerät (1) zu dem Akkumulator (2);
- Steuern der Energieübertragung von dem Akkumulator (2) zu dem Gerät (1) in Abhängigkeit von der Typ-Information;
**gekennzeichnet durch** den Schritt
- Beeinflussen der Energieübertragung mithilfe von wenigstens einem Parameter, ausgewählt aus der Gruppe
+ Einschalten nur bei Vorliegen vorgegebener weiterer Bedingungen
+ Abfrage von Sicherheitsparametern in Abhängigkeit von dem erkannten Gerätetyp
+ Verlauf des von der Akkusteuerung (4) zur Verfügung gestellten elektrischen Stroms über die Zeit
+ Prüfen einer vorgegebenen Einschaltreihenfolge
+ Einschaltverhalten nach vorherigem Betrieb und Abschalten des Geräts (1).

7. Verfahren nach Anspruch 6, wobei
- beim Starten des Geräts (1) eine Start-Routine durchgeführt wird, bei der von dem Gerät (1) die Typ-Information an die Akkusteuerung (4) übertragen wird; und wobei
- die Parameter für den Betrieb der Akkusteuerung (4) festgelegt werden aufgrund der übertragenen Typ-Information und aufgrund von in der Akkusteuerung (4) hinterlegten gerätespezifischen Informationen.

## Claims

1. Battery (2) for coupling to a device (1), comprising
- an energy storage device (3) for storing electrical energy; and comprising
- a battery controller (4) for influencing the transmission of the electrical energy to the device (1);
wherein the battery controller (4) is designed
- to detect the device type of the device (1) which is coupled to the battery (2); and
- to influence the transmission of the electrical energy to the device (1) in dependence upon the detected device type;
**characterised in that**
- the battery controller (4) is designed to influence the energy transmission with the aid of at least one parameter selected from the group of:
+ switching on only when specified further conditions exist
+ interrogating safety parameters in dependence upon the detected device type
+ progression of the electrical current, which is provided by the battery controller (4), over time
+ testing a specified switching-on sequence
+ switching-on behaviour after prior operation and switching off the device (1).

2. Battery as claimed in claim 1, comprising
- an energy storage device (3) for storing electrical energy;
- an electrical interface (6) for transmitting the electrical energy from the energy storage device (3) to the device (1);
- a battery controller (4) for controlling the electrical interface (6) and influencing the transmission of the electrical energy to the device;
- a device interface (8) which can be coupled to the device (1) for transmitting data from and to the device (1);
wherein
- device-specific information for at least two different device types is stored in the battery controller (4);
- the battery controller (4) is designed to detect the device type of a device (1) which is coupled to the device interface (8);
- the battery controller (4) is designed to influence the transmission of the electrical energy in dependence upon the detected device type.

3. Battery as claimed in any one of the preceding claims, wherein, in order to detect the device type of the device (1) which is coupled to the device interface (8), type information output by the device (1) can be received by the battery controller (4) via the device interface (8).

4. Device (1), comprising
- a device controller and a working apparatus which can be controlled by the device controller; and
- a battery (2) as claimed in any one of claims 1 to 3;
wherein
- the battery (2) is interchangeably fastened to the device (1); and wherein
- data can be exchanged between the device controller and the battery controller (4) of the battery (2) via the device interface (8) of the battery (2).

5. System comprising a device (1) and a battery (2) as claimed in any one of claims 1 to 3, wherein
- the battery (2) is interchangeably fastened to the device (1) and can be coupled to the device (1);
- device-specific information relating to at least two different device types is stored in the battery controller (4);
- type information relating to the type of the device (1) can be transmitted from this device (1) to the battery (2); and wherein
- the battery controller (4) can control the supply of current from the battery (2) to the device (1) in dependence upon the type information.

6. Method for supplying electrical energy from a battery (2) as claimed in any one of claims 1 to 3 to a device (1), comprising the steps of:
- transmitting type information relating to the type of the device (1) from the device (1) to the battery (2);
- controlling the energy transmission from the battery (2) to the device (1) in dependence upon the type information;
**characterised by** the step of:
- influencing the energy transmission with the aid of at least one parameter selected from the group of:
+ switching on only when specified further conditions exist
+ interrogating safety parameters in dependence upon the detected device type
+ progression of the electrical current, which is provided by the battery controller (4), over time
+ testing a specified switching-on sequence
+ switching-on behaviour after prior operation and switching off the device (1).

7. Method as claimed in claim 6, wherein
- when the device (1) is started, a start routine is performed in which the type information is transmitted from the device (1) to the battery controller (4); and wherein
- the parameters for the operation of the battery controller (4) are established on the basis of the transmitted type information and on the basis of device-specific information stored in the battery controller (4).

## Revendications

1. Accumulateur (2) destiné à être couplé à un appareil (1), comprenant
un dispositif de stockage d'énergie (3) pour stocker de l'énergie électrique ; et un dispositif de commande d'accumulateur (4) pour influencer le transfert d'énergie électrique vers l'appareil (1) ; le dispositif de commande d'accumulateur (4) étant conçu pour
détecter le type d'appareil (1) couplé à l'accumulateur (2) ; et
pour influencer le transfert d'énergie électrique vers l'appareil (1) en fonction du type d'appareil détecté ;
**caractérisé en ce que**
le dispositif de commande d'accumulateur (4) est conçu pour influencer le transfert d'énergie à l'aide d'au moins un paramètre choisi parmi le groupe
+ mise en marche uniquement en présence d'autres conditions prédéfinies
+ interrogation de paramètres de sécurité en fonction du type d'appareil détecté
+ évolution dans le temps du courant électrique fourni par le dispositif de commande d'accumulateur (4)
+ vérification d'un ordre de mise en marche prédéfini
+ comportement de mise en marche après un fonctionnement préalable et mise hors tension de l'appareil (1).

2. Accumulateur selon la revendication 1, comprenant
un dispositif de stockage d'énergie (3) pour stocker de l'énergie électrique ; une interface électrique (6) pour transmettre l'énergie électrique du dispositif de stockage d'énergie (3) à l'appareil (1) ;
un dispositif de commande d'accumulateur (4) pour commander l'interface électrique (6) et influencer le transfert d'énergie électrique vers l'appareil ;
une interface d'appareil (8) pouvant être couplée à l'appareil (1) pour transférer des données depuis et vers l'appareil (1) ;
des informations spécifiques à l'appareil pour au moins deux types d'appareils différents étant enregistrées dans le dispositif de commande d'accumulateur (4) ;
le dispositif de commande d'accumulateur (4) étant conçu pour détecter le type d'appareil d'un appareil (1) couplé à l'interface d'appareil (8) ;
le dispositif de commande d'accumulateur (4) étant conçu pour influencer le transfert d'énergie électrique en fonction du type d'appareil détecté.

3. Accumulateur selon l'une des revendications précédentes, dans lequel, pour détecter le type d'appareil de l'appareil (1) couplé à l'interface d'appareil (8), une information de type émise par l'appareil (1) peut être reçue par le dispositif de commande d'accumulateur (4) via l'interface d'appareil (8).

4. Appareil (1) comprenant
une commande d'appareil et un dispositif de travail pouvant être commandé par la commande d'appareil ; et
un accumulateur (2) selon l'une des revendications 1 à 3 ;
l'accumulateur (2) étant fixé de manière amovible à l'appareil (1) ; et les données pouvant être échangées entre la commande d'appareil et le dispositif de commande d'accumulateur (4) de l'accumulateur (2) via l'interface d'appareil (8) de l'accumulateur (2).

5. Système comprenant un appareil (1) et un accumulateur (2) selon l'une des revendications 1 à 3,
l'accumulateur (2) étant fixé de manière amovible à l'appareil (1) et pouvant être couplé à l'appareil (1) ;
des informations spécifiques à l'appareil concernant au moins deux types d'appareils différents étant enregistrées dans le dispositif de commande d'accumulateur (4) ;
une information de type concernant le type de cet appareil (1) pouvant être transmise de l'appareil (1) à l'accumulateur (2) ; et
le dispositif de commande d'accumulateur (4) permettant de commander une alimentation en courant de l'accumulateur (2) vers l'appareil (1) en fonction de l'information de type.

6. Procédé pour alimenter un appareil (1) en énergie électrique à partir d'un accumulateur (2) selon l'une des revendications 1 à 3, comprenant les étapes suivantes :
transmission d'une information de type concernant le type d'appareil (1) depuis l'appareil (1) vers l'accumulateur (2) ;
commande du transfert d'énergie de l'accumulateur (2) vers l'appareil (1) en fonction des informations de type ; **caractérisé par** l'étape
d'influence du transfert d'énergie à l'aide d'au moins un paramètre choisi parmi le groupe
+ mise en marche uniquement en présence d'autres conditions prédéfinies
+ interrogation de paramètres de sécurité en fonction du type d'appareil détecté
+ évolution dans le temps du courant électrique fourni par le dispositif de commande d'accumulateur (4)
+ vérification d'un ordre de mise en marche prédéfini
+ comportement de mise en marche après un fonctionnement préalable et mise hors tension de l'appareil (1).

7. Procédé selon la revendication 6, dans lequel
lors du démarrage de l'appareil (1), une routine de démarrage est exécutée, dans laquelle les informations de type sont transmises par l'appareil (1) au dispositif de commande d'accumulateur (4) ; et dans lequel
les paramètres de fonctionnement du dispositif de commande d'accumulateur (4) sont déterminés sur la base des informations de type transmises et des informations spécifiques à l'appareil enregistrées dans le dispositif de commande d'accumulateur (4).
